# EUROPEAN PATENT APPLICATION

(11) **EP 4 431 339 A1**
(43) Date of publication of application: **18.09.2024**
(21) Application number: 22891939.5
(22) Date of filing: 07.11.2022
(51) Int. Cl.: B60Q 3/80, B60Q 3/76

(54) **IN-VEHICLE ATMOSPHERE LAMP CONTROL METHOD AND APPARATUS, AND STORAGE MEDIUM**

(30) Priority: 12.11.2021 CN 202111342151
(71) Applicant: Beijing Co Wheels Technology Co., Ltd, Beijing 101300 (CN)
(72) Inventor: LI, Jianhua, Beijing 101300 (CN)
(74) Representative: Maiwald GmbH
(86) International application number: PCT/CN2022/130402
(87) International publication number: WO 2023/083145

(57) **Abstract**

Provided are an in-vehicle atmosphere lamp control method and apparatus, and a storage medium. The method, executed by a vehicle end system, comprises: receiving an atmosphere lamp adjustment request sent by a first terminal device, the atmosphere lamp adjustment request comprising ambient light data collected by the first terminal device (101); determining a target state of an atmosphere lamp according to the ambient light data (102); and controlling the atmosphere lamp according to the target state (103).

## Description

### CROSS-REFERENCE TO RELATED APPLICATION

This application is based on and claims priority to Chinese Patent Application No. 202111342151.1, filed on November 12, 2021, the entire content of which is incorporated herein by reference.

### TECHNICAL FIELD

The disclosure relates to the field of vehicle control technologies, and specifically to a method and an apparatus for controlling an in-vehicle ambient lamp, and a storage medium.

### BACKGROUND

Typically, an in-vehicle ambient lamp refers to a light fixture mounted within a vehicle cabin for adjusting the internal ambiance. In the related art, when the in-vehicle ambient lamp is adjusted, a dedicated acquisition device is usually required to be mounted first to acquire an image of the surroundings and adjust the in-vehicle ambient lamp by analyzing the acquired image of the surroundings. However, there is a substantial cost involved in installing and deploying such devices. Hence, it becomes an urgent problem to be solved how to reduce the cost associated with adjusting the in-vehicle ambient lamp.

### SUMMARY

A method and an apparatus for controlling an in-vehicle ambient lamp, and a storage medium are provided in the disclosure.

According to a first aspect of embodiments of the disclosure, a method for controlling an in-vehicle ambient lamp is provided. The method is performed by a vehicle on-board system. The method includes:
receiving an ambient lamp adjustment request from a first terminal device, in which the ambient lamp adjustment request includes ambient light data acquired by the first terminal device; determining a target state of the ambient lamp according to the ambient light data; and controlling the ambient lamp according to the target state.

According to a second aspect of embodiments of the disclosure, a method for controlling an in-vehicle ambient lamp is provided. The method is performed by a first terminal device. The method includes: acquiring ambient light data; and sending an ambient lamp adjustment request to a vehicle on-board system, in which the ambient lamp adjustment request includes the ambient light data.

According to a third aspect of embodiments of the disclosure, an apparatus for controlling an in-vehicle ambient lamp is provided. The apparatus is configured on a vehicle on-board system side. The apparatus includes: a receiving module, configured to receive an ambient lamp adjustment request from a first terminal device, in which the ambient lamp adjustment request includes ambient light data acquired by the first terminal device; a determining module, configured to determine a target state of the ambient lamp according to the ambient light data; and a control module, configured to control the ambient lamp according to the target state.

According to a fourth aspect of embodiments of the disclosure, an apparatus for controlling an in-vehicle ambient lamp is provided. The apparatus is configured on a first terminal device side. The apparatus includes: an acquiring module, configured to acquire ambient light data; and a sending module, configured to send an ambient lamp adjustment request to a vehicle on-board system, in which the ambient lamp adjustment request includes the ambient light data.

According to a fifth aspect of embodiments of the disclosure, an electronic device is provided and includes: at least one processor, and a memory communicatively connected to the at least one processor; in which the memory is configured to store instructions executable by the at least one processor, and when the instructions are executed by the at least one processor, the at least one processor is caused to perform the method for controlling an in-vehicle ambient lamp according to embodiments of the disclosure.

According to a sixth aspect of embodiments of the disclosure, a non-transitory computer-readable storage medium storing computer instructions is provided, in which the computer instructions are configured to cause a computer to perform the method for controlling an in-vehicle ambient lamp according to embodiments of the disclosure.

According to a seventh aspect of embodiments of the disclosure, a computer program product including a computer program is provided. When the computer program is executed by a processor, the method in any embodiment of the first aspect or the method in any one embodiment of the second aspect is implemented.

According to an eighth aspect of embodiments of the disclosure, a computer program including a computer program code is provided. When the computer program code runs on a computer, the computer is caused to perform the method in any one embodiment of the first aspect or the method in any one embodiment of the second aspect.

According to embodiments of the disclosure, the ambient lamp adjustment request from the first terminal device may be received first. The ambient lamp adjustment request includes the ambient light data acquired by the first terminal device. Then, the target state of the ambient lamp may be determined according to the ambient light data, and the ambient lamp may be controlled according to the determined target state of the ambient lamp. Therefore, the in-vehicle ambient lamp may be adjusted according to the ambient light data acquired by the terminal device without mounting a device such as an additional sensor within the vehicle, which reduces the cost.

Additional aspects and advantages of the disclosure will be given in part in the following descriptions, become apparent in part from the following descriptions, or be learned from the practice of the disclosure.

### BRIEF DESCRIPTION OF THE DRAWINGS

The above and/or additional aspects and advantages of the disclosure will become obvious and easy to understand from the following descriptions according to the embodiments in conjunction with the accompanying drawings, in which:
FIG. 1 is a flowchart illustrating a method for controlling an in-vehicle ambient lamp according to embodiments of the disclosure.
FIG. 2 is a flowchart illustrating a method for controlling an in-vehicle ambient lamp according to other embodiments of the disclosure.
FIG. 2A is a diagram illustrating an in-vehicle ambient lamp according to embodiments of the disclosure.
FIG. 3 is a flowchart illustrating a method for controlling an in-vehicle ambient lamp according to still other embodiments of the disclosure.
FIG. 4 is a flowchart illustrating a method for controlling an in-vehicle ambient lamp according to yet still other embodiments of the disclosure.
FIG. 5 is a flowchart illustrating a method for controlling an in-vehicle ambient lamp according to yet still other embodiments of the disclosure.
FIG. 5A is a diagram illustrating a process for controlling an in-vehicle ambient lamp according to embodiments of the disclosure.
FIG. 6 is a diagram illustrating an apparatus for controlling an in-vehicle ambient lamp according to embodiments of the disclosure.
FIG. 7 is a diagram illustrating an apparatus for controlling an in-vehicle ambient lamp according to embodiments of the disclosure.
FIG. 8 is a block diagram illustrating an example electronic device for realizing implementations of the disclosure.

### DETAILED DESCRIPTION

Embodiments of the disclosure will be described in detail in the following and examples of embodiments are illustrated in the drawings. The same or similar elements and the elements having the same or similar functions are denoted by like reference numerals throughout the descriptions. Embodiments described herein with reference to the drawings are illustrative, are only used to explain the disclosure, and are not construed to limit the disclosure. On the contrary, embodiments of the disclosure include all variations, amendments, and equivalents falling within the spirit and meaning of the appended claims.

It should be noted that, according to embodiments, an executive entity of a method for controlling an in-vehicle ambient lamp may be an apparatus for controlling an in-vehicle ambient lamp. The apparatus may be implemented by means of software and/or hardware and may be configured in an electronic device. The electronic device may include but not limited to a terminal, a server side, and the like.

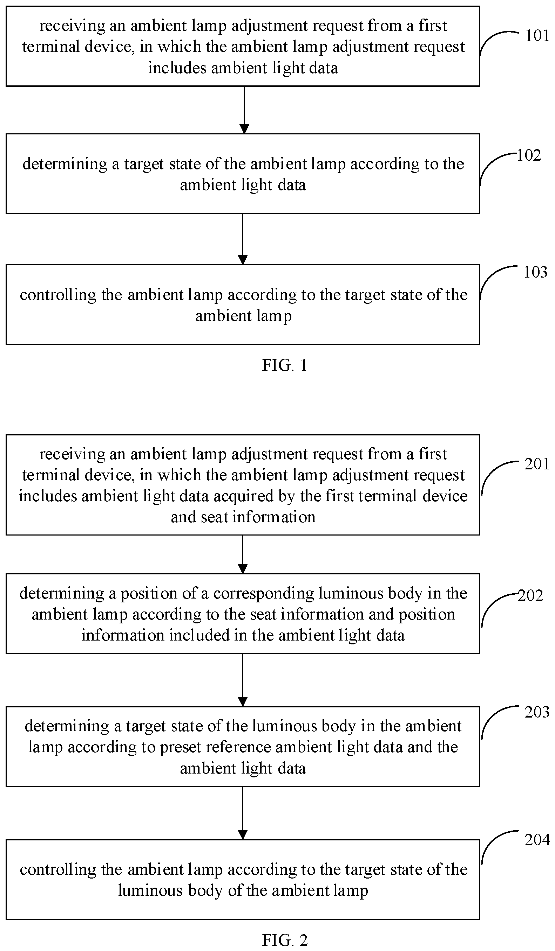

FIG. 1 is a flowchart illustrating a method for controlling an in-vehicle ambient lamp according to embodiments of the disclosure. As illustrated in FIG. 1, the method is performed by a vehicle on-board system and may include steps 101 to 103.

At step 101, an ambient lamp adjustment request is received from a first terminal device. The ambient lamp adjustment request includes ambient light data.

According to embodiments of the disclosure, the ambient lamp adjustment request may be a request for indicating to adjust the ambient lamp, which may include any form of request. For example, the request may be in a voice form or in a form of message pushing, which is not limited in the disclosure.

In addition, the ambient light data may be any data configured to represent ambient light information of a current in-vehicle environment, such as luminance, chrominance, or the like, which is not limited in the disclosure.

Therefore, according embodiments of the disclosure, an existing ambient light sensor in the terminal device may be used to collect and acquire the ambient light data, without necessarily adding an additional sensor or an acquisition device, so that the cost for acquiring the ambient light data is reduced. The terminal device may be a mobile terminal carried by a passenger.

It should be noted that the in-vehicle ambient lamp according to embodiments of the disclosure may be an ambient lamp within any vehicle, for example, an ambient lamp in a car, a bus, and any other type and model of vehicle, which is not limited in the disclosure.

At step 102, a target state of the ambient lamp is determined according to the ambient light data.

According to embodiments of the disclosure, the target state of the ambient lamp may be a target luminance value, a target chrominance value, or the like of the ambient lamp, or may be a target ON state of the ambient lamp, which will not be limited in the disclosure.

In addition, there may be a variety of situations when the target state of the ambient lamp is determined according to the ambient light data.

For example, a luminance threshold may be set in advance. If the luminance threshold is a, and when the luminance of the ambient light data is less than the luminance threshold, the luminance of the ambient lamp may be turned up. For example, it may be determined that the target state of the ambient lamp is: the luminance of 1.5*a; or may be the luminance of 2*a. Alternatively, when the luminance of the ambient light data is greater than the luminance threshold, the luminance of the ambient lamp may be turned down. For example, it may be determined that the target state of the ambient lamp is: the luminance of 0.5*a; or may be the luminance of 0.8*a.

It should be noted that the above examples are only illustrative, and are not intended to be a limitation of the method for determining the target state of the ambient lamp according to embodiments of the disclosure.

According to some embodiments, the target state of the ambient lamp may be determined according to the ambient light data and seat information corresponding to the ambient lamp adjustment request.

According to some embodiments, the ambient lamp adjustment request may further include the seat information corresponding to the ambient lamp adjustment request, which will not be limited in the disclosure.

According to some embodiments, the vehicle on-board system may acquire the seat information by means of other manners, for example, by an image acquired by an in-vehicle image acquisition device, or by an in-vehicle human-computer interaction interface.

According to some embodiments, the seat information may be any information indicating a position of a user in a cabin, such as a seat position, a seat number, and a seat identifier, which is not limited in the disclosure.

It may be understood that, reference ambient light data may be preset. The reference ambient light data may be the reference luminance or reference chrominance, which is not limited in the disclosure.

In addition, the reference ambient light data corresponding to different seats may be same, or may be partially same, or may be different, which will not be limited in the disclosure.

For example, when different seats correspond to different reference ambient light data, the corresponding reference ambient light data may be determined according to the seat information corresponding to the ambient lamp adjustment request, and the target state of the ambient light may be determined according to the reference ambient light data and the ambient light data corresponding to the seat.

For example, the reference luminance corresponding to a seat 1 is a₀, and the reference luminance corresponding to a seat 2 is b₀. If the seat information corresponding to the ambient lamp adjustment request is the seat 1, a luminance value included in the acquired ambient light data is a₁. If a₁ is less than the reference luminance a₀, the luminance value a₁ may be turned up, and the adjusted luminance value may be taken as the target luminance of the ambient lamp.

It may be understood that, a chrominance value in the ambient light data may be adjusted according to a reference chrominance value corresponding to each seat, to determine the target state of the ambient lamp, which will not be limited in the disclosure.

It should be noted that the above examples are only illustrative, and are not intended to be a limitation of the reference luminance, and the target state of the ambient lamp according to embodiments of the disclosure.

Therefore, according to embodiments of the disclosure, when the target state of the ambient lamp is determined, the target state of the ambient lamp corresponding to the seat information may be determined according to the seat information and the ambient light data, so that demands of users in different seats may be satisfied, which improves the accuracy of adjusting the ambient lamp and further improves a vehicle experience of the user.

At step 103, the ambient lamp is controlled according to the target state of the ambient lamp.

It may be understood that the ambient lamp may be controlled according to the determined target state of the ambient lamp, so that the ambient lamp may work according to the target state.

For example, it is determined that the target state of the ambient lamp is a target luminance value a, in which case the ambient lamp may be controlled to be in an ON state with the luminance value a, which will not be limited in the disclosure.

According to embodiments of the disclosure, the ambient lamp adjustment request from the first terminal device may be received first. The ambient lamp adjustment request includes the ambient light data acquired by the first terminal device. Then, the target state of the ambient lamp may be determined according to the ambient light data, and the ambient lamp may be controlled according to the determined target state of the ambient lamp. Therefore, the in-vehicle ambient lamp may be adjusted according to the ambient light data acquired by the terminal device without mounting a device such as an additional sensor with in the vehicle, which reduces the cost.

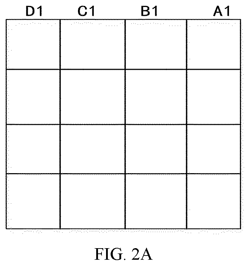

According to the above embodiments, after the ambient lamp adjustment request is acquired, the target state of the ambient lamp may be determined according to the ambient light data, and further the ambient lamp may be controlled according to the target state of the ambient lamp. According to some embodiments, the ambient light data may include position information, so that the target state of the ambient lamp may be determined according to the position information included in the ambient light data and the ambient light data acquired, and control of the ambient lamp may be achieved according to the target state of the ambient lamp. The above process is described in combination with FIG. 2.

FIG. 2 is a flowchart illustrating a method for controlling an in-vehicle ambient lamp according to embodiments of the disclosure. As illustrated in FIG. 2, the method performed by a vehicle on-board system may include steps 201 to 204.

At step 201, an ambient lamp adjustment request is received from a first terminal device. The ambient lamp adjustment request includes ambient light data acquired by the first terminal device and seat information.

According to some embodiments, the seat information may be any information indicating a position of a user in a cabin, such as a seat position, a seat number, and a seat identifier, which is not limited in the disclosure.

At step 202, a position of a corresponding luminous body in the ambient lamp is determined according to the seat information and position information included in the ambient light data.

According to embodiments of the disclosure, the position information may be a projection angle of the light source relative to the terminal device, and may be determined by an existing ambient light sensor in the first terminal device, which is not limited in the disclosure.

For example, if the luminous body of the ambient lamp is illustrated in FIG. 2A, it has been set: when the terminal device is located in a copilot, if the ambient light enters from the right front of the copilot and an included angle between the ambient light and the terminal device is [0, 45°], a luminous body in an A1 column may be correspondingly adjusted; and if the included angle is [45°, 90°], a luminous body in a B1 column may be correspondingly adjusted. If the ambient light enters from the left front of the copilot and the included angle between the ambient light and the terminal device is [0,45°], a luminous body in a D1 column may be correspondingly adjusted; and if the included angle is [45°,90°], a luminous body in a C1 column may be correspondingly adjusted. Therefore, if the seat information corresponding to the ambient lamp adjustment request is the copilot, and the position information included in the ambient light data is as follows: the ambient light enters from the front right of the copilot and the included angle between the ambient light and the terminal device is 30°, it may be determined that the position of the corresponding luminous body to be adjusted in the ambient lamp is the luminous body in the A1 column.

It should be noted that the above examples are only illustrative, and are not intended to be a limitation of the luminous body of the ambient lamp, the seat information, the position information, and the manner for determining the position of the luminous body in the ambient lamp according to embodiments of the disclosure.

At step 203, a target state of the luminous body in the ambient lamp is determined according to preset reference ambient light data and the ambient light data.

According to embodiments of the disclosure, the ambient light data may include luminance data or may include chrominance data, which will not be limited in the disclosure.

The reference ambient light data may be preset reference data, for example, may be the reference luminance and reference chrominance, which will not be limited in the disclosure.

It may be understood that the target state may be an ON or OFF state, or may be the target luminance and target chrominance after being turned on, which will not be limited in the disclosure.

For example, a target luminance value and a target chromatic value corresponding to the luminous body may be determined according to a relationship between the luminance data included in the ambient light data and the reference luminance or a relationship between the chrominance data included in the ambient light data and the reference chrominance.

For example, the preset reference luminance is a, and the preset reference luminance is b. If the luminance included in the ambient light data is a₁, which is less than the reference luminance a, it may be determined that the target luminance value corresponding to the luminous body is a, or may be 0.95*a, or may be 1.1*a. Alternatively, if the chrominance data included in the ambient light data is b₁, which is greater than the reference luminance b, it may be determined that the target chrominance value corresponding to the luminous body is b, or may be 0.85*a, etc.

It should be noted that, the above examples are only illustrative, and are not intended to be a limitation of the target state corresponding to the luminous body according to embodiments of the disclosure.

At step 204, the ambient lamp is controlled according to the target state of the luminous body in the ambient lamp.

It may be determined that after the target state of the luminous body in the ambient lamp is determined, for example, the target luminance value and the target chrominance value, the luminous body may be controlled to be in ON at the target luminance value and the target chrominance value, thereby achieving the adjustment of the ambient lamp.

According to embodiments of the disclosure, the ambient lamp adjustment request from the first terminal device may be received first. The ambient lamp adjustment request includes the ambient light data acquired by the first terminal device and the seat information. Then, the position of the corresponding luminous body in the ambient lamp may be determined according to the seat information and the position information included in the ambient light data. Then, the target state of the ambient lamp may be determined according to the preset reference ambient light data and the ambient light data, and the ambient lamp may be controlled according to the target state of the luminous body in the ambient lamp. Therefore, the target state of the luminous body in the ambient lamp may be determined according to the ambient light data acquired by the terminal device and the seat information, and the ambient lamp may be controlled, which reduces the cost and enhances the accuracy of controlling the ambient lamp, and further enhances the effect of the user experience.

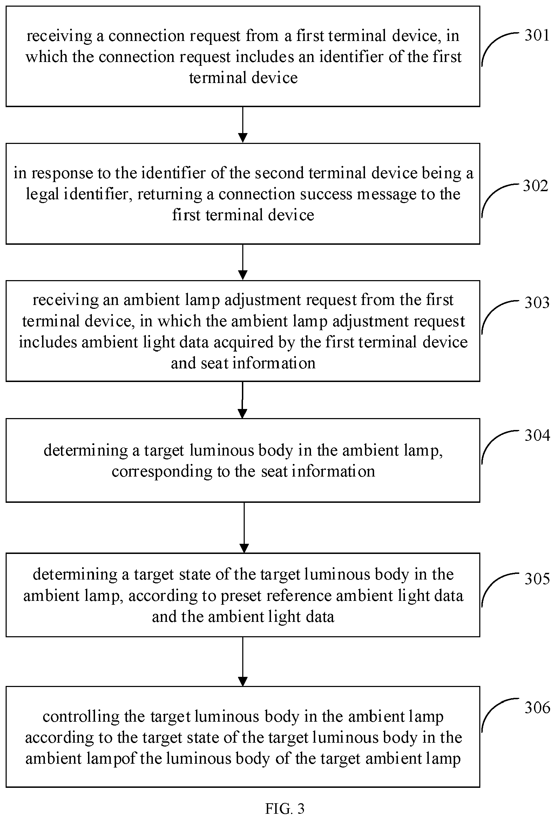

It may be understood that, luminous bodies in the ambient lamp corresponding to different seats may be preset, so that when the ambient lamp is controlled, the luminous body in the ambient lamp corresponding to the seat may be determined according to a corresponding relationship between the seats and the luminous bodies in the ambient lamp, and control of the luminous body in the ambient lamp may be achieved according to the target state of the luminous bodies in the ambient lamp. The process is described below referring to FIG. 3.

FIG. 3 is a flowchart illustrating a method for controlling an in-vehicle ambient lamp according to embodiments of the disclosure. As illustrated in FIG. 3, the method performed by a vehicle on-board system may include steps 301 to 306.

At step 301, a connection request from a first terminal device is received. The connection request includes an identifier of the first terminal device.

According to embodiments of the disclosure, the first terminal device may send the connection request to the vehicle on-board system before adjusting the in-vehicle ambient lamp, so that a normal communication transmission between the first terminal device and the vehicle on-board system may be maintained.

It may be understood that the connection request may be in any form or any type, for example, a Bluetooth^{™} connection request, which will not be limited in the disclosure.

At step 302, in response to the identifier of the second terminal device being a legal identifier, a connection success message is returned to the first terminal device.

According to embodiments of the disclosure, the vehicle on-board system may verify the validity of the first terminal device after receiving the connection request from the first terminal device. For example, it may verify the identifier of the first terminal device, which is not limited in the disclosure.

It may be understood that there may be a plurality of manners for verifying the identifier of the first terminal device.

For example, a legal identifier set may be preset, and the identifier of the first terminal device included in the request may be compared with a legal identifier in the preset legal identifier set. If the identifier of the first terminal device is in the preset legal identifier set, it may be determined that the identifier of the first terminal device is the legal identifier. Alternatively, a blacklist of illegal identifiers may be preset. If the identifier of the first terminal device is not in the blacklist corresponding to the illegal devices, it may be determined that the identifier of the first terminal device is the legal identifier. Alternatively, identification may be performed manually. Alternatively, the identifier of the terminal device may be verified in any other desirable manner, which is not limited in the disclosure.

At step 303, an ambient lamp adjustment request from the first terminal device is received. The ambient lamp adjustment request includes ambient light data acquired by the first terminal device and seat information.

According to embodiments of the disclosure, when the identifier of the first terminal device is the legal identifier, the vehicle on-board system may return the connection success message to the first terminal device, so that the first terminal device may send the ambient lamp adjustment request to the vehicle on-board system after receiving the connection success message, which ensures the security and reliability of data transmission.

At step 304, a target luminous body in the ambient lamp, corresponding to the seat information, is determined.

According to embodiments of the disclosure, there may be a plurality of luminous bodies in the in-vehicle ambient lamp. The luminous bodies of the ambient lamp corresponding to different seats may be partially same or may be different, which will not be limited in the disclosure.

For example, a luminous body in the ambient lamp corresponding to each seat may be preset, so that the corresponding target luminous body in the ambient lamp, may be determined according to the seat information after the ambient lamp adjustment request is received.

For example, a seat 1 corresponds to luminous bodies 1 to 10 in the ambient lamp, a seat 2 corresponds to luminous bodies 11 to 20 in the ambient lamp, and a seat 3 corresponds to luminous bodies 21 to 30 in the ambient lamp. If it is determined that the seat information in the ambient lamp adjustment request is the seat 3, it may be determined that corresponding target luminous bodies in the ambient lamp are luminous bodies 3-30, etc.

It should be noted that, the above examples are only illustrative, and are not intended to be a limitation of a corresponding relationship between the seat and the luminous body in the ambient lamp according to embodiments of the disclosure.

At step 305, a target state of the target luminous body in the ambient lamp, is determined according to preset reference ambient light data and ambient light data.

According to embodiments of the disclosure, the reference ambient light data may be the reference luminance, reference chrominance, etc. The ambient light data may include luminance data, chrominance data, etc., which will not be limited in the disclosure.

It may be understood that, after the target luminous body in the ambient lamp, corresponding to the seat information is determined, a target luminance value of the target luminous body in the ambient lamp, is determined according to the reference luminance of the preset reference ambient light data and the luminance data in the in-vehicle ambient light data; or a target chrominance value of the target luminous body in the ambient lamp, is determined according to the reference chrominance of the preset reference ambient light data and the chrominance data in the in-vehicle ambient light data, which will not be limited in the disclosure.

For example, in the preset reference ambient light data, the reference luminance is a, and the reference chrominance is b. If the luminance included in the ambient light data is a₁, and is less than the reference luminance a, it may be determined that the target luminance value corresponding to the target luminous body in the ambient lamp, is a, or may be 0.95*a, or may be 1.1*a. Alternatively, if the chrominance data included in the ambient light data is b₁, and is greater than the reference luminance b, it may be determined that the target chrominance value corresponding to the luminous body is b, or may be 0.85*a, etc.

It should be noted that the above examples are only illustrative, and are not intended to be a limitation of the method for determining the target state of the luminous body in the ambient lamp in embodiments of the disclosure.

At step 306, the target luminous body in the ambient lamp, is controlled according to the target state of the target luminous body in the ambient lamp.

It may be determined that after the target state of the target luminous body in the ambient lamp, is determined, the target luminous body in the ambient lamp, may be controlled to be in ON in the target state, further to achieve the adjustment of the ambient lamp.

According to some embodiments, the ambient lamp adjustment request may further include a plurality of pieces of ambient light data and corresponding seat information, so that the target state of the ambient lamp may be determined according to each of the plurality of pieces of ambient light data and corresponding seat information, and the ambient lamp may be controlled based on the target state of the ambient lamp.

There may be a corresponding relationship between the seat information and the ambient light data. For example, the seat 1 corresponds to the ambient light data 1, the seat 2 corresponds to the ambient light data 2, and the seat 3 corresponds to the ambient light data 3, which will not be limited in the disclosure.

According to some embodiments, the target state of the ambient lamp may be determined according to the reference ambient light data and each piece of the ambient light data, and a target state of each luminous body in the ambient lamp may be determined according to the target state of the ambient lamp corresponding to each piece of the ambient light data, and a relative position of seat information corresponding to each piece of the ambient light data and the ambient lamp.

For example, the reference luminance in the preset reference ambient light data is a. When the luminance data in the ambient light data corresponding to the seat 1 is less than the reference luminance a, it may be determined that the target state 1 of the ambient lamp is 1.3*a. When the luminance data in the ambient light data corresponding to the seat 2 is greater than the reference luminance a, it may be determined that the target state 2 of the ambient lamp is 0.8*a. Then, the target state of each luminous body in the ambient lamp may be determined according to the target state of the ambient lamp corresponding to each piece of the ambient light data, and a relative position of the seat 1 and the ambient lamp, and a relative position of the seat 2 and the ambient lamp. If the luminous bodies 1-10 in the ambient lamp are located above the seat 1, the luminous bodies 11-20 in the atmosphere lamp are located between the seat 1 and the seat 2, and the luminous bodies 21-30 in the atmosphere lamp are located above the seat 2, it may be determined that the target luminance of the luminous bodies 1-10 is: 1.3*a, the target luminance of the luminous bodies 11-20 is: (1.3*a +0.8*a)/2, and the target luminance of the luminous bodies 21-30 is 0.8*a.

It should be noted that the above examples are illustrative only and are not intended to be a limitation of the manner for controlling the ambient lamp in embodiments of the disclosure.

According to embodiments of the disclosure, the connection request from the first terminal device may be received first. The connection request includes the identifier of the first terminal device. Then, in response to the identifier of the second terminal device being the legal identifier, the connection success message is returned to the first terminal device. Then, the ambient lamp adjustment request from the first terminal device may be acquired, and the corresponding target luminous body in the ambient lamp, may be determined according to the seat information. Then, the target state of the target luminous body in the ambient lamp, may be determined according to the preset reference ambient light data and the ambient light data, and the target ambient lamp may be controlled according to the target state of the target ambient lamp. Therefore, a part of luminous bodies of the ambient lamp corresponding to the seat may be determined according to the corresponding relationship between the seats and the luminous bodies of the ambient lamp. Then, the luminous bodies in the ambient lamp corresponding to the seat may be controlled based on the ambient light data acquired by the terminal device and the reference ambient light data, so that the precise control of the ambient lamp for users in different seats may be achieved on the basis of not increasing the cost, which improves the accuracy and reliability of controlling the ambient lamp, and further enhances the effect of the user experience.

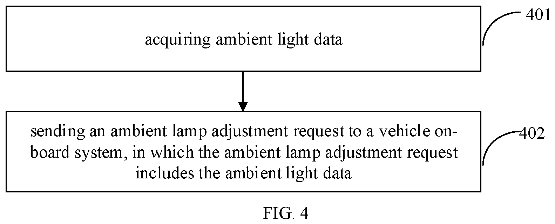

According to some embodiments, the first terminal device may acquire the ambient light data first, and send the ambient lamp adjustment request to the vehicle on-board system, to achieve the adjustment of the ambient map, which will be described below in combination with FIG. 4.

FIG. 4 is a flowchart illustrating a method for controlling an in-vehicle ambient lamp according to embodiments of the disclosure. As illustrated in FIG. 4, the method is performed by a first terminal device and may include steps 401 to 402.

At step 401, ambient light data is acquired.

According to embodiments of the disclosure, the ambient light data may include luminance data or may include chrominance data or may be position information of in-vehicle ambient light, which will not be limited in the disclosure.

According to some embodiments, the in-vehicle ambient light data may be acquired by an ambient light sensor in the first terminal device.

The first terminal device may be any electronic device having an ambient light sensor, and may communicate with the vehicle on-board system. Specification or model of the terminal device is not limited in the disclosure.

It may be understood that the ambient light sensor may be used to sense an ambient light condition. Specification or model of the ambient light sensor is not limited in the disclosure.

Alternatively, the ambient light data may be acquired by receiving the in-vehicle ambient light data from the second terminal device.

According to embodiments of the disclosure, one piece of ambient light data from the second terminal device may be received, or a plurality of pieces of ambient light data from the second terminal device may be received, which is not limited in the disclosure.

It may be understood that a position where the second terminal device is located may be different, and the acquired in-vehicle ambient light data may be same or may be different, which is not limited in the disclosure.

For example, the second terminal device 1 corresponds to the seat 1, the second terminal device 2 corresponds to the seat 2, and the second terminal device 1 and the second terminal device 2 send the in-vehicle ambient light data to the first terminal device, so that the first terminal device may receive the ambient light data of the second terminal device 1 and the ambient light data of the second terminal device 2, which may ensure the comprehensiveness, accuracy, and reliability of the acquired ambient light data as much as possible.

It should be noted that the above examples are only illustrative, and are not intended to be a limitation of the manner for acquiring the in-vehicle ambient light data in embodiments of the disclosure.

At step 402, an ambient lamp adjustment request is sent to a vehicle on-board system. The ambient lamp adjustment request includes the ambient light data and seat information.

According to embodiments of the disclosure, the ambient lamp adjustment request may be sent to the vehicle on-board system in any desirable manner. For example, the ambient lamp adjustment request may be sent in a voice form; or the ambient lamp adjustment request may be triggered in a form of instructions, which is not limited in the disclosure.

According to some embodiments, the first terminal device may acquire ambient light data 1 by its own ambient light sensor, and receive ambient light data 2 from the second terminal device before sending the ambient lamp adjustment request to the vehicle on-board system. Then, the ambient light data 1 may be compared with the ambient light data 2. For example, more accurate ambient light data with a larger data volume and a wider data range may be sent, which provides conditions for ensuring the accuracy of adjustment of the ambient light, which will not be limited in the disclosure.

Optionally, in an actual implementation process, in order to ensure the security and reliability of data transmission between the vehicle on-board system and the first terminal device, when the first terminal device communicates with the vehicle on-board system, the first terminal device may send a connection request to the vehicle on-board system first, and send the ambient lamp adjustment request to the vehicle on-board system when receiving a connection success message.

It may be understood that the connection request may be in any form or any type, for example, may be a Bluetooth^{™} connection request, or may be a connection request in the same wireless network, or may be in other any form, which will not be limited in the disclosure.

According to embodiments of the disclosure, the ambient light data may be acquired first, and the ambient lamp adjustment request may be sent to the vehicle on-board system. The ambient lamp adjustment request includes the ambient light data. Therefore, the vehicle on-board system may adjust the ambient lamp according to the ambient light data from the terminal device, which not only reduces the cost, but also provides conditions for improving the accuracy and reliability of the ambient lamp control, which may further satisfy the user demand and improve the user experience.

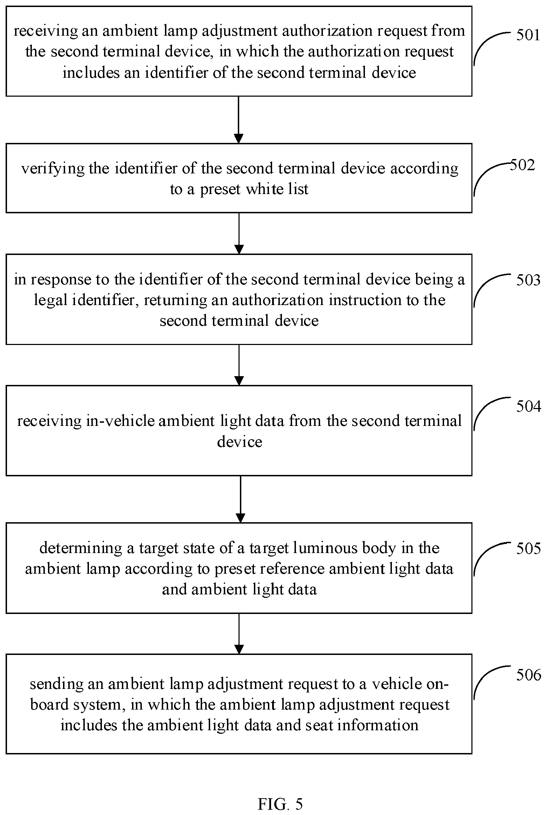

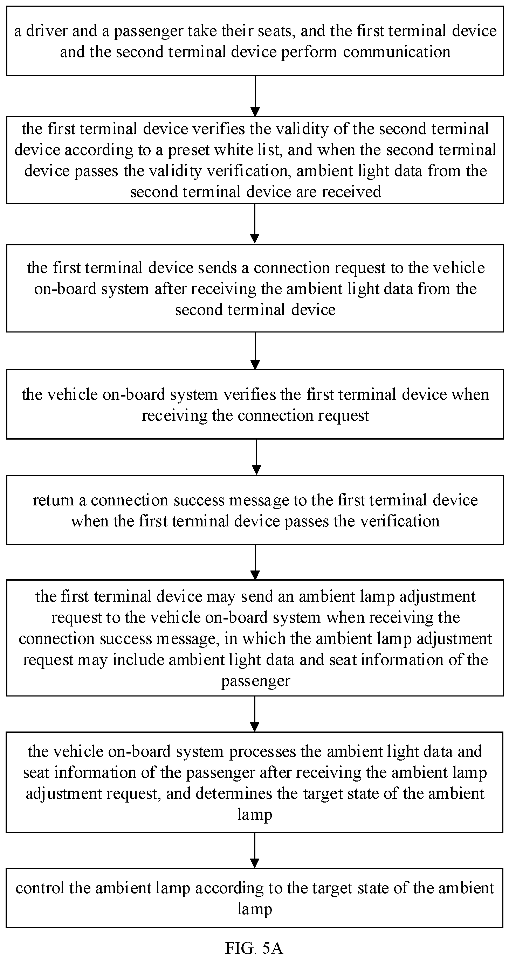

It may be understood that, in order to ensure the security of data transmission, the first terminal device may verify the validity of the second terminal device before receiving the ambient light data from the second terminal device. When the second terminal device passes the verification, in-vehicle ambient light data from the second terminal device may be received, which will be described below in combination with FIG. 5.

FIG. 5 is a flowchart illustrating a method for controlling an in-vehicle ambient lamp according to embodiments of the disclosure. As illustrated in FIG. 5, the method is performed by a first terminal device and may include steps 501 to 506.

At step 501, an ambient lamp adjustment authorization request from the second terminal device is received. The authorization request includes an identifier of the second terminal device.

According to embodiments of the disclosure, the ambient lamp adjustment authorization request may be in any form, which is not limited in the disclosure.

In addition, a style or a presentation form of the identifier of the second terminal device may be preset information that uniquely represents information of the terminal device. For example, the identifier may be a second terminal device 1, an XX terminal device, which is not limited in the disclosure.

According to some embodiments, the first terminal device and the second terminal device may be connected in any desirable manner, for example, in a Bluetooth^{™} manner; or the first terminal device may provide a quick response (QR) code for the second terminal device to scan and connect, which is not limited in the disclosure.

It may be understood that, when the first terminal device and the second terminal device are successfully connected, the second terminal device may send the ambient lamp adjustment authorization request to the first terminal device. Therefore, after the first terminal device receives the ambient lamp adjustment authorization request from the second terminal device, the identifier of the second terminal device may be acquired, which will not be limited in the disclosure.

At step 502, the identifier of the second terminal device is verified according to a preset white list.

According to embodiments of the disclosure, the preset white list may be preset information including a legal terminal device, which will not be limited in the disclosure.

For example, the preset white list may be prestored in the first terminal device. If the identifier of the second terminal device from the first terminal device is an identifier in the white list, it may be determined that the identifier of the second terminal device is a legal identifier, that is, the second terminal device passes legal verification, which will not be limited in the disclosure.

At step 503, in response to the identifier of the second terminal device being a legal identifier, an authorization instruction will be returned to the second terminal device.

According to embodiments of the disclosure, the authorization request may be in any form, for example, message push, or Bluetooth^{™} reply, which is not limited in the disclosure.

It may be understood that, when the identifier of the second terminal device is a legal identifier, it may be determined that the second terminal device passes the legal verification, and the authorization indication may be returned to the second terminal device, so that the second terminal device may send the in-vehicle ambient light data according to the authorization indication.

It may be understood that, when the first terminal device and the second terminal device are connected in the manner of the QR code, whether to return the authorization instruction to the second terminal device may be determined according to a moment when the first terminal device displays the QR code and a moment when the ambient lamp adjustment authorization request from the second terminal device is received.

According to some embodiments, a first moment when the first terminal device displays the QR code and a second moment when the ambient lamp adjustment authorization request is received may be determined first. In response to a difference value between the first moment and the second moment being less than a preset duration, the authorization instruction is returned to the second terminal device.

According to embodiments of the disclosure, the preset duration may be for example, 30s, 1 min, 3 min, which is not limited in the disclosure.

According to some embodiments, when the preset duration is 1 min, if the first moment when the first terminal device displays the QR code is a t₀ moment, and the second moment when the first terminal device receives the ambient lamp adjustment authorization request from the second terminal device is a (t₀+30s) moment, it may be determined that a difference value between the first moment and the second moment is 30s, and is less than the preset duration 1 min, in which case the authorization instruction may be returned to the second terminal device.

It should be noted that the above examples are illustrative only and are not intended to be a limitation of the preset duration, the first moment, and the second moment according to embodiments of the disclosure.

At step 504, in-vehicle ambient light data from the second terminal device are received.

It should be noted that, specific content and implementations of step 504 may refer to descriptions of other embodiments, which are not repeated herein.

At step 505, an ambient lamp adjustment request is sent to a vehicle on-board system. The ambient lamp adjustment request includes the ambient light data and seat information.

According to embodiments of the disclosure, the seat information may be determined by the first terminal device according to information such as the received instruction, or may be determined by receiving data from the second terminal device, which will not be limited in the disclosure.

Therefore, according to embodiments of the disclosure, the first terminal device may send the ambient lamp adjustment request to the vehicle on-board system after acquiring the ambient light data and the seat information, so that the vehicle on-board system acquires the ambient light data and the seat information according to the ambient lamp adjustment request received, which will not be limited in the disclosure.

The method for controlling the in-vehicle ambient lamp in the disclosure is applicable to any vehicle and any scenario, which will not be limited in the disclosure. Taking the diagram as illustrated in FIG. 5A for example, a process of controlling the in-vehicle ambient lamp is illustrated.

As illustrated in FIG. 5A, a driver is in a driver's seat and a passenger selects a seat to sit when entering the vehicle. The first terminal device corresponding to the driver and the second terminal device corresponding to the passenger may perform a near field communication, such as in the form of Bluetooth^{™} pairing, or in the form of scanning the QR code, or performing pairing and connection between terminal devices by means of a specific application (APP). Then, after the first terminal device receives the ambient lamp adjustment authorization request from the second terminal device, the validity of the second terminal device may be verified. For example, if the identifier of the second terminal device is in the preset white list, it may be determined that the second terminal device passes the validity verification, and may return an authorization indication to the second terminal device. Then, the first terminal device may send a connection request such as a Bluetooth^{™} connection request to the vehicle on-board system after receiving the ambient light data from the second terminal device.

The vehicle on-board system may verify the first terminal device when receiving the connection request, and may return a connection success message to the first terminal device when passing the verification. The first terminal device may send the ambient lamp adjustment request to the vehicle on-board system when receiving the connection success message. The ambient lamp adjustment request may include ambient light data. The vehicle on-board system may analyze and process the ambient light data in combination with the preset reference ambient light data after receiving the ambient lamp adjustment request, and determine the target state of the ambient lamp in combination with the seat information of the passenger, and control the ambient lamp according to the target state of the ambient lamp.

It should be noted that the above examples are illustrative only and are not intended to be a limitation of the manner for communication between the terminal device and the vehicle on-board system and the manner in which the vehicle on-board system controls the ambient lamp in embodiments of the disclosure.

According to embodiments of the disclosure, the ambient lamp adjustment authorization request from the second terminal device may be received first. The authorization request includes the identifier of the second terminal device. Then, the identifier of the second terminal device may be verified according to the preset white list. In response to the identifier of the second terminal device being the legal identifier, the authorization instruction is returned to the second terminal device. Then, the in-vehicle ambient light data from the second terminal device may be received, and the ambient lamp adjustment request may be sent to the vehicle on-board system. The ambient lamp adjustment request includes the ambient light data and seat information. Therefore, the validity of the second terminal device may be verified, which ensues the security and reliability of in-vehicle ambient light data acquired, which provides conditions for improving the accuracy and reliability of the ambient lamp control, and further may satisfy the user demand and improve the user experience.

In order to implement the above embodiments, an apparatus for controlling an in-vehicle ambient lamp is further provided.

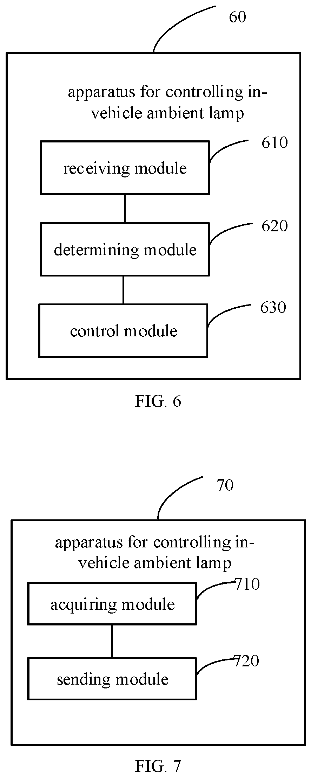

FIG. 6 is a diagram illustrating an apparatus for controlling an in-vehicle ambient lamp according to embodiments of the disclosure.

As illustrated in FIG. 6, an apparatus 60 for controlling the in-vehicle ambient lamp is configured on a vehicle on-board system side. The apparatus 60 includes a receiving module 610, a determining module 620, and a control module 630.

The receiving module 610 is configured to receive an ambient lamp adjustment request from a first terminal device. The ambient lamp adjustment request includes ambient light data acquired by the first terminal device.

The determining module 620 is configured to determine a target state of the ambient lamp according to the ambient light data.

The control module 630 is configured to control the ambient lamp according to the target state. According to some embodiments, the determining module 620 includes a determining unit.

The determining unit is configured to determine the target state of the ambient lamp according to the ambient light data and seat information corresponding to the ambient lamp adjustment request.

According to some embodiments, the ambient light data includes chrominance data, luminance data, and position information. The determining unit is specifically configured to:
determine the target state of the ambient lamp according to the ambient light data and the seat information by:
determining a position of a corresponding luminous body in the ambient lamp according to the seat information and position information comprised in the ambient light data; and
determining a target state corresponding to the luminous body according to preset reference ambient light data and the ambient light data.

According to some embodiments, the determining unit is further specifically configured to:
determine a target state of an ambient lamp corresponding to each piece of ambient light data according to preset reference ambient light data and each piece of ambient light data comprised in the ambient lamp adjustment request; and
determine a target state of each luminous body in the ambient lamp according to the target state of the ambient lamp corresponding to each piece of the ambient light data, and a relative position of seat information corresponding to each piece of the ambient light data and the ambient lamp.

According to some embodiments, the determining unit is further specifically configured to:
determine a target luminous body in the ambient lamp, corresponding to the seat information; and
determine a target state of the target luminous body in the ambient lamp, according to preset reference ambient light data and the ambient light data.

Functions and implementation principles of the functions according to embodiments of the disclosure may refer to the method embodiments, which will not be repeated herein.

In the apparatus for controlling the in-vehicle ambient lamp according to embodiments of the disclosure, the ambient lamp adjustment request from the first terminal device may be received first. The ambient lamp adjustment request includes the ambient light data acquired by the first terminal device. Then, the target state of the ambient lamp may be determined according to the ambient light data, and the ambient lamp may be controlled according to the target state of the ambient lamp determined. Therefore, the in-vehicle ambient lamp may be adjusted according to the ambient light data acquired by the terminal device without mounting a device such as an additional sensor with in the vehicle, which reduces the cost.

FIG. 7 is a diagram illustrating an apparatus for controlling an in-vehicle ambient lamp according to embodiments of the disclosure.

As illustrated in FIG. 7, an apparatus 70 for controlling the in-vehicle ambient lamp is configured on a first terminal device side. The apparatus 70 includes an acquiring module 710 and a sending module 720.

The acquiring module 710 is configured to acquire ambient light data.

The sending module 720 is configured to send an ambient lamp adjustment request to a vehicle on-board system. The ambient lamp adjustment request includes the ambient light data.

According to some embodiments, the acquiring module 710 is specifically configured to:
acquire in-vehicle ambient light data by an ambient light sensor in the first terminal device, in which the first terminal device may communicate with the vehicle on-board system;
   or,
receive in-vehicle ambient light data from a second terminal device.

According to some embodiments, the apparatus further includes a receiving module, a verifying module, and a return module.

The receiving module is configured to receive an ambient lamp adjustment authorization request from the second terminal device. The authorization request includes an identifier of the second terminal device.

The verifying module is configured to verify the identifier of the second terminal device according to a preset white list.

The return module is configured to, in response to the identifier of the second terminal device being a legal identifier, return an authorization instruction to the second terminal device.

According to some embodiments, the return module is configured to:
receive an ambient lamp adjustment authorization request from the second terminal device, in which the authorization request includes an identifier of the second terminal device;
determine a first moment when the first terminal device displays a quick response code and a second moment when the authorization request is received; and
in response to a difference value between the first moment and the second moment being less than a preset duration, return an authorization instruction to the second terminal device.

According to some embodiments, the ambient lamp adjustment request includes the position information.

Functions and implementation principles of the functions according to embodiments of the disclosure may refer to the method embodiments, which will not be repeated herein.

In the apparatus for controlling the in-vehicle ambient lamp according to embodiments of the disclosure, the ambient light data may be acquired first, and the ambient lamp adjustment request may be sent to the vehicle on-board system. The ambient lamp adjustment request includes the ambient light data. Therefore, the vehicle on-board system may adjust the ambient lamp based on the ambient light data from the first terminal device, which not only reduces the cost, but also provides conditions for improving the accuracy and reliability of the ambient lamp control, which may further satisfy the user demand and improve the user experience.

An electronic device, a readable storage medium, a computer program product, and a computer program are further provided according to embodiments of the disclosure.

In order to achieve the above embodiments, a non-transitory computer-readable storage medium storing instructions is provided. The instructions are applicable to be loaded and executed by a processor to perform the method for controlling the in-vehicle ambient lamp provided in the above any one embodiment. The execution process may refer to descriptions of the method for controlling the in-vehicle ambient lamp provided in the above any one embodiment, which will not be repeated herein. In order to achieve the above embodiments, a computer program product is provided. When instructions in the computer program product are executed by a processor, the method for controlling the in-vehicle ambient lamp provided in the above any one embodiment is performed. The execution process may refer to descriptions of the method for controlling the in-vehicle ambient lamp provided in the above any one embodiment, which will not be repeated herein.

In order to achieve the above embodiments, a computer program including a computer program code is further provided. When the computer program code runs on a computer, the computer is caused to perform the method for controlling the in-vehicle ambient lamp provided in the above any one embodiment. The execution process may refer to descriptions of the method for controlling the in-vehicle ambient lamp provided in the above any one embodiment, which will not be repeated herein.

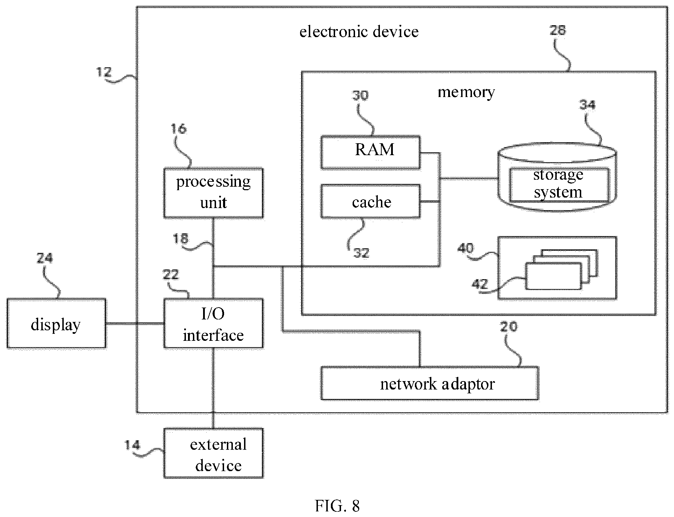

FIG. 8 is a block diagram illustrating an example computer device for realizing implementations of the disclosure. An electronic device 12 illustrated in FIG. 8 is only an example and should not bring any limitation on the function or application range of the embodiments.

As illustrated in FIG. 8, the electronic device 12 is represented in the form of a general-purpose computing device. Components of the electronic device 12 may include but not limited to one or more processors or processing units 16, a system memory 28, a bus 18 connected to different system components (including the system memory 28 and the processing unit 16).

The bus 18 represents one or more of several types of bus structures, including a memory bus or a memory controller, a peripheral bus, a graphics acceleration port, a processor, or a local bus with any of a plurality of bus structures. For example, the architectures include, but are not limited to, an industry standard architecture (ISA) bus, a micro channel architecture (MAC) bus, an enhanced ISA bus, a video electronics standards association (hereinafter referred to as VESA) local bus, and a peripheral component interconnection (PCI) bus.

The electronic device 12 includes a variety of computer system readable media. The media may be any available media that may be accessed by the electronic device 12, including volatile and non-volatile media, and removable and non-removable media.

The memory 28 may include a computer system readable medium in the form of a volatile memory, for example, a random access memory (RAM) 30 and/or a cache memory 32. The electronic device 12 may further include other volatile and non-volatile media, and removable and non-removable media. As an example only, a storage system 34 may be configured to read and write a non-removable and non-volatile magnetic medium (not illustrated in FIG. 8, commonly referred to as a "hard disk drive").

Although not illustrated in FIG. 8, a disk drive for reading and writing a removable non-volatile magnetic disk (for example, a "floppy disk"), and an optical disk drive for reading and writing a removable non-volatile optical disk (such as a compact disc read only memory (CD-ROM), a digital video disc read only memory (DVD-ROM), or other optical media) may be provided. In these cases, each driver may be connected to the bus 18 through one or more data media interfaces. The memory 28 may include at least one program product having a set (for example, at least one) program modules configured to perform functions of embodiments of the disclosure.

A program/utility 40 having a set of (at least one) program modules 42 may be stored, and for example, may be stored in the memory 28. The program modules 42 include but not limited to, an operating system, one or more applications, other program modules and program data, and each or a certain of combination of these examples may include implementations of a network environment. The program modules 42 generally perform functions and/or methods in the embodiments described herein.

The electronic device 12 may also communicate with one or more external devices 14 (for example, a keyboard, a pointing device, a display 24), and may communicate with one or more devices that enable a user to interact with the electronic device 12, and/or any device (for example, a network card, a modem, etc.) that enables the electronic device 12 to communicate with one or more other computing devices. The communication may be performed by an input/output (I/O) interface 22. The electronic device 12 may further communicate with one or more networks (such as a local area network (LAN), a wide area network (WAN), and/or a public network, such as Internet) through a network adapter 20. As shown, the network adapter 20 communicates with other modules of the electronic device 12 via the bus 18. It should be understood that although not shown in the figures, other hardware and/or software modules may be used in combination with the electronic device 12, including but not limited to: a microcode, a device driver, a redundant processing unit, an external disk drive array, a RAID system, a tape drive and a data backup storage system.

The processing unit 16 executes various function applications by running a program stored in the system memory 28, and for example, implements the method for controlling the in-vehicle ambient lamp mentioned in the foregoing embodiments.

In the technical solution provided in the disclosure, the ambient lamp adjustment request from the first terminal device may be received first. The ambient lamp adjustment request includes the ambient light data acquired by the first terminal device. Then, the target state of the ambient lamp may be determined according to the ambient light data, and the ambient lamp may be controlled according to the target state of the ambient lamp determined. Therefore, the in-vehicle ambient lamp may be adjusted according to the ambient light data acquired by the terminal device without mounting a device such as an additional sensor within the vehicle, which reduces the cost.

It should be noted that, the foregoing explanation of the method embodiments for controlling the in-vehicle ambient lamp is applicable to the apparatus for controlling the in-vehicle ambient lamp, the non-transitory computer-readable storage medium, the electronic device, the computer program product, and the computer program, which will not be repeated herein.

After considering the specification and practicing the disclosure here, those skilled in the art will easily think of other implementations. The present application is intended to cover any variations, usages, or adaptive changes of the disclosure. These variations, usages, or adaptive changes follow the general principles of the disclosure and include common knowledge or conventional technical means in the technical field not disclosed by the disclosure. The description and the embodiments are to be regarded as exemplary only, and the true scope and spirit of embodiments in the disclosure are given by the appended claims.

It should be understood that the disclosure is not limited to the precise structure described above and shown in the drawings, and various modifications and changes may be made without departing from its scope. The scope of the present application is only limited by the appended claims. The scope of the disclosure is only limited by the appended claims.

It should be noted that, in descriptions of the disclosure, these terms such as "first" and "second" used in the descriptions of the disclosure are only for a description purpose, but cannot be understood as relative importance of indication or implication. In addition, in the description of the disclosure, "a plurality of" means two or more than two, unless otherwise noted.

Any process or method descriptions described in the flowchart or in other ways herein may be understood as a module, a segment or a part of a code including one or more executable instructions configured to implement steps of specific logical functions or processes, and scopes of embodiments of the disclosure include additional implementations, which may include implement functions not be in the order shown or discussed including the substantially simultaneous manner according to functions involved or in reverse order, which should be understood by those skilled in the art of embodiments of the disclosure.

It should be understood that each part of the disclosure may be realized by the hardware, software, firmware or their combination. In the above implementation, multiple steps or methods may be stored in a memory and implemented by a software or a firmware executed by a suitable instruction execution system. For example, if implemented with a hardware, they may be implemented by any of the following techniques or their combination known in the art as in another implementation: a discrete logic circuit with logic gate circuits configured to achieve logic functions on data signals, a special integrated circuit with appropriate combined logic gate circuits, a programmable gate array (PGA), a field programmable gate array (FPGA), etc.

It may be understood by those skilled in the art that all or a part of the steps carried by the method in the above-described embodiments may be completed by relevant hardware instructed by a program. The program may be stored in a computer readable storage medium. When the program is executed, one or a combination of the steps of the method in the above-described embodiments may be completed.

In addition, individual function units in the embodiments of the disclosure may be integrated in one processing module or may be separately physically present, or two or more units may be integrated in one module. The integrated module as described above may be achieved in the form of hardware, or may be achieved in the form of a software functional module. If the integrated module is achieved in the form of a software functional module and sold or used as a separate product, the integrated module may also be stored in a computer readable storage medium.

The storage medium mentioned above may be read-only memories, magnetic disks or CD, etc.

In descriptions of the specification, descriptions with reference to terms "one embodiment", "some embodiments", "examples", "specific examples" or "some examples" etc. mean specific features, structures, materials or characteristics described in conjunction with the embodiment or example are included in at least one embodiment or example of the disclosure. In this specification, the schematic representations of the above terms do not have to be a same embodiment or example. Moreover, specific features, structures, materials or characteristics described may be combined in any one or more embodiments or examples in a suitable manner.

Although explanatory embodiments have been shown and described, it would be appreciated by those skilled in the art that the above embodiments cannot be construed to limit the disclosure, and changes, alternatives, and modifications can be made in the embodiments without departing from scope of the disclosure.

All embodiments of the disclosure may be executed separately or in combination with other embodiments, and are deemed within a protection scope of the disclosure.

## Claims

1. A method for controlling an in-vehicle ambient lamp, performed by a vehicle on-board system, the method comprising
receiving an ambient lamp adjustment request from a first terminal device, wherein the ambient lamp adjustment request comprises ambient light data acquired by the first terminal device;
determining a target state of the ambient lamp according to the ambient light data; and
controlling the ambient lamp according to the target state.

2. The method according to claim 1, wherein determining the target state of the ambient lamp according to the ambient light data comprises:
determining the target state of the ambient lamp according to the ambient light data and seat information corresponding to the ambient lamp adjustment request.

3. The method according to claim 2, wherein determining the target state of the ambient lamp according to the ambient light data and the seat information comprises:
determining a position of a corresponding luminous body in the ambient lamp according to the seat information and position information comprised in the ambient light data; and
determining a target state corresponding to the luminous body according to preset reference ambient light data and the ambient light data.

4. The method according to claim 2, wherein determining the target state of the ambient lamp according to the ambient light data and the seat information comprises
determining a target state of an ambient lamp corresponding to each piece of ambient light data according to preset reference ambient light data and each piece of ambient light data comprised in the ambient lamp adjustment request; and
determining a target state of each luminous body in the ambient lamp according to the target state of the ambient lamp corresponding to each piece of the ambient light data, and a relative position of seat information corresponding to each piece of the ambient light data and the ambient lamp.

5. The method according to claim 2, wherein determining the target state of the ambient lamp according to the ambient light data and the seat information comprises
determining a target luminous body in the ambient lamp, corresponding to the seat information; and
determining a target state of the target luminous body in the ambient lamp, according to preset reference ambient light data and the ambient light data.

6. A method for controlling an in-vehicle ambient lamp, performed by a first terminal device, the method comprising:
acquiring ambient light data; and
sending an ambient lamp adjustment request to a vehicle on-board system, wherein the ambient lamp adjustment request comprises the ambient light data.

7. The method according to claim 6, wherein acquiring the ambient light data comprises
acquiring in-vehicle ambient light data by an ambient light sensor in the first terminal device, wherein the first terminal device may communicate with the vehicle on-board system;
or,
receiving in-vehicle ambient light data from a second terminal device.

8. The method according to claim 7, before receiving the in-vehicle ambient light data from the second terminal device, the method comprising:
receiving an ambient lamp adjustment authorization request from the second terminal device, wherein the authorization request comprises an identifier of the second terminal device;
verifying the identifier of the second terminal device according to a preset white list; and
in response to the identifier of the second terminal device being a legal identifier, returning an authorization instruction to the second terminal device.

9. The method according to claim 7, before receiving the in-vehicle ambient light data from the second terminal device, the method comprising:
receiving an ambient lamp adjustment authorization request from the second terminal device, wherein the authorization request comprises an identifier of the second terminal device;
determining a first moment when the first terminal device displays a quick response code and a second moment when the authorization request is received; and
in response to a difference value between the first moment and the second moment being less than a preset duration, returning an authorization instruction to the second terminal device.

10. The method according to any one of claims 6 to 9, wherein the ambient lamp adjustment request comprises seat information.

11. An apparatus for controlling an in-vehicle ambient lamp, configured on a vehicle on-board system side, the apparatus comprising:
a receiving module, configured to receive an ambient lamp adjustment request from a first terminal device, wherein the ambient lamp adjustment request comprises ambient light data acquired by the first terminal device;
a determining module, configured to determine a target state of the ambient lamp according to the ambient light data; and
a control module, configured to control the ambient lamp according to the target state.

12. An apparatus for controlling an in-vehicle ambient lamp, configured on a first terminal device side, the apparatus comprising:
an acquiring module, configured to acquire ambient light data; and
a sending module, configured to send an ambient lamp adjustment request to a vehicle on-board system, wherein the ambient lamp adjustment request comprises the ambient light data.

13. An electronic device, comprising:
at least one processor; and
a memory communicatively connected to the at least one processor; wherein
the memory is configured to store instructions executable by the at least one processor, and when the instructions are executed by the at least one processor, the at least one processor is caused to perform the method according to any one of claims 1 to 5, or the method according to any one of claims 6 to 10.

14. A non-transitory computer-readable storage medium storing computer instructions, wherein the computer instructions are configured to cause a computer to perform the method according to any one of claims 1 to 5 or the method according to any one of claims 6 to 10.

15. A computer program product, comprising a computer program, wherein when the computer program is executed by a processor, the method according to any one of claims 1 to 5 or the method according to any one of claims 6 to 10 is implemented.

16. A computer program, comprising a computer program code, wherein when the computer program code runs on a computer, the computer is caused to perform the method according to any one of claims 1 to 5 or the method according to any one of claims 6 to 10.
